# EUROPEAN PATENT SPECIFICATION

(11) **EP 0 671 224 B1**
(45) Date of publication and mention of the grant of the patent: **15.07.1998**
(21) Application number: 95100021.5
(22) Date of filing: 02.01.1995
(51) Int. Cl.: B09B 3/00, B30B 9/30, F26B 1/00

(54) **Process for treating urban solid waste, and apparatus for performing it**
Verfahren und Vorrichtung zur Behandlung von festen städtischen Abfällen
Procédé et dispositif pour le traitement de déchets urbains solides

(30) Priority: 08.03.1994 IT MI940419
(43) Date of publication of application: 13.09.1995
(73) Proprietor: Castelli, Elio, I-24024 Gandino (Bergamo) (IT); Accorsi, Cesare, I-00100 Roma (IT); Agosti, Artemisio, I-24100 Bergamo (IT)
(72) Inventor: Castelli, Elio, I-24024 Gandino (Bergamo) (IT); Accorsi, Cesare, I-00100 Roma (IT); Agosti, Artemisio, I-24100 Bergamo (IT)
(74) Representative: Modiano, Guido, Dr.-Ing.

(56) References cited:
- EP-A- 0 445 696
- EP-A- 0 579 322
- CH-A- 507 804
- FR-A- 1 529 580
- FR-A- 2 628 517
- GB-A- 2 086 763
- US-A- 5 124 126
- US-A- 5 254 265

## Description

The present invention relates to a process for treating urban solid waste and to the apparatus for performing it.

It is known that a currently strongly felt problem is related to the difficulties encountered in the disposal of urban solid waste, since such disposal cannot be performed with means that produce low pollution levels and are accepted by the populations near which these facilities must be installed.

The system currently in most widespread use entails the burying of urban solid waste in landfills which are constituted by basins that are made impermeable with a bottom liner above which the urban solid waste is placed in layers intercalated with soil.

Due to its intrinsic characteristics, urban solid waste requires the use of large storage basins and of systems for draining and recovering the biogas produced during the fermentation stage that is typical of all organic material in anaerobic conditions.

Landfills of the type currently in use lead to negative environmental consequences since light materials are disseminated into the environment by wind, and unpleasant odors proliferate that are due to the fermentation of the urban solid waste, which is not always covered on a daily basis.

A considerable proliferation of insects, rodents, and birds such as gulls furthermore occurs; by eating the waste, they disseminate it into the surrounding environment.

There are also fire hazards which, if the waste burns at low temperature, can produce noxious substances.

The above described drawbacks combine with the need to "farm" the landfill even for several years after its closing, continuing to extract and burn the biogas and to restore the subsidences and settlings caused by the destruction of organic material obtained with the production of biogas.

A process and an apparatus having the features comprised in the preamble of claims 1 and 12, are known from the prior document CH-A-507 804.

Further state-of-the-art processes and devices, are disclosed for treating waste, by the prior documents EP-A-445 696, US-A-5 254 265 and EP-A-579 322.

A principal aim of the invention is indeed to solve the problems described above by providing a process for treating urban solid waste and waste comparable to urban waste, and an apparatus for performing it which allow to significantly reduce the volume of urban solid waste, accordingly reducing storage space.

Within the scope of this aim, a particular object of the invention is to provide a process that allows to inactivate the organic material contained in the waste, thus avoiding fermentation and biogas production and furthermore avoiding the escape of noxious fumes into the environment.

Another object of the present invention is to provide a process that allows to place in the landfill a material that is stable, has high-level mechanical characteristics, and in addition to not developing biogas does not cause land subsidences and does not require subsequent continuous monitoring of the landfill.

Another object of the present invention is to provide a process that eliminates the need for daily covering of the material placed in the landfill.

Another object of the present invention is to provide a process that is advantageous from a merely economical point of view.

This aim, these objects, and others which will become apparent hereinafter are achieved by a process for treating urban solid waste, according to the invention as defined in the independent claim 1.

Further characteristics and advantages will become apparent from the description of a preferred but not exclusive embodiment of a process for treating urban solid waste and of the apparatus for performing it, which is illustrated only by way of non-limitative example in the accompanying drawings, wherein:

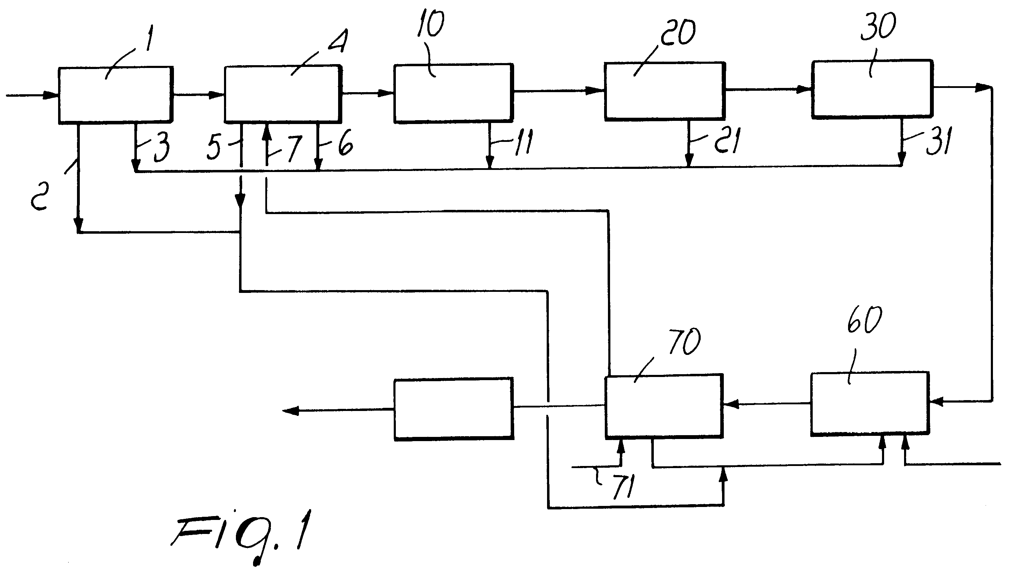

figure 1 is a block diagram of the apparatus;
figure 2 is an exploded perspective view of the mold that can be used during the compression stage;
figure 3 is a sectional view of the mold during the lid application stage;
figure 4 is a partially sectional view of the mold in closed position;
figure 5 is a top plan view of the mold;
figure 6 is a sectional view, taken along the plane VI-VI of figure 4;
figure 7 is a partially cutout top plan view of the body of the mold.

With reference to the above figures, the apparatus for treating urban solid waste and solid waste comparable to urban waste, according to the invention, comprises a crushing unit 1 in which the urban solid waste is introduced as it leaves the collection and compaction trucks.

As is known, urban solid waste is highly variable in the qualitative content of packages used for household storage.

There is a substantial difference in physical and qualitative characteristics between urban solid waste generated by a household and waste produced industrially or semi-industrially, and there is also a great difference among geographic regions and even among the different parts of a single city.

On the average, the density of urban solid waste as it leaves the collection and compaction trucks is approximately 0.3 tons/cu m, and this density tends to decrease when the material is unloaded.

The crushing unit has the purpose of tearing up the containers and of reducing the size of the larger pieces of material.

The crushing unit is of the sealed type and is kept under slight negative pressure by an air aspiration system designated by the reference numeral 2.

A first drainage of percolate furthermore occurs in this stage by means of a first discharge duct designated by the reference numeral 3.

The crushed material is conveyed, for example by means of housed and closed conveyor belts of the plate type, to a storage and pre-drying unit, designated by the reference numeral 4, which is advantageously provided by means of hoppers which are contained in a closed building and are kept under a slight negative pressure by means of an aspiration duct 5 which fully changes the air 3-4 times per hour.

The hoppers are advantageously provided with a draining bottom for a second drainage of a further part of percolate by means of a second duct 6, and there is also a duct 7 for injecting hot air to pre-dry the crushed material.

The crushed and dried material is lifted from the storage hoppers by means of housed conveyor belts of the plate type and is sent to an optional homogenization and pressing unit 10 which is constituted by a screw feeder that has a high-strength profile and is placed inside a concentric double-wall housing in which the inner wall has holes to perform an intermediate drainage of the percolation liquid.

The advancement of the material at a low rotation rate in the concentric part homogenizes the material and produces an intermediate drainage of the percolate by means of the duct 11.

This homogenization step is advantageous, since it has been observed that urban solid waste is extremely variable in terms of quality; furthermore, also as regards the lack of recovery of recyclable materials, it has been observed that material compressed at low pressure, despite releasing most of its moisture, could have horizontal stratifications, caused by the presence of non-uniform materials, which prevented the production of a compact but sufficiently stabilized material.

Accordingly, a homogenization stage has been performed experimentally after the storage and pre-drying step, allowing to obtain a material that is more uniform and easier to press and eliminating the stratifications due to non-uniform materials.

After the homogenization unit, the apparatus has a large pre-compaction chamber 20 in which a pressure that varies between 50 and 100 kg/sq cm is applied.

This stage produces a considerable reduction in volume and separates out most of the percolate by means of a third drainage performed with a third drainage duct 21.

The spring effect, caused by the incompressibility of liquids, is very modest in this case and does not invalidate the yield of the pre-compaction chamber.

The low-pressure pre-compaction chamber is advantageously of the type with a moving wall, has a volume that is adequate to the intended processing line, and has gravimetric and volumetric control systems for supervising the working cycle.

This unit, too, has a double wall: the inner wall has holes for draining the percolate, whereas the outer wall acts as housing to contain the percolated liquid.

The upper wall is movable and is moved by hydropneumatic cylinders which ensure its closure when loading ends.

The oleodynamic pusher which is installed at one end has a pressing power of 50-100 kg/sq cm and ensures a first considerable reduction in the volume of the urban solid waste and the elimination of most of the percolate.

The working cycle of the piston for the low-pressure compression step lasts approximately 30-120 seconds, and the density of the compacted material reaches approximately 1-1.2 tons/cu m.

The wall that lies opposite the pusher is movable and opens at the end of the cycle, connecting the low-pressure part to the high-pressure compression unit 30, with a final drainage 31 to which the material pre-compacted in the unit 20 is sent.

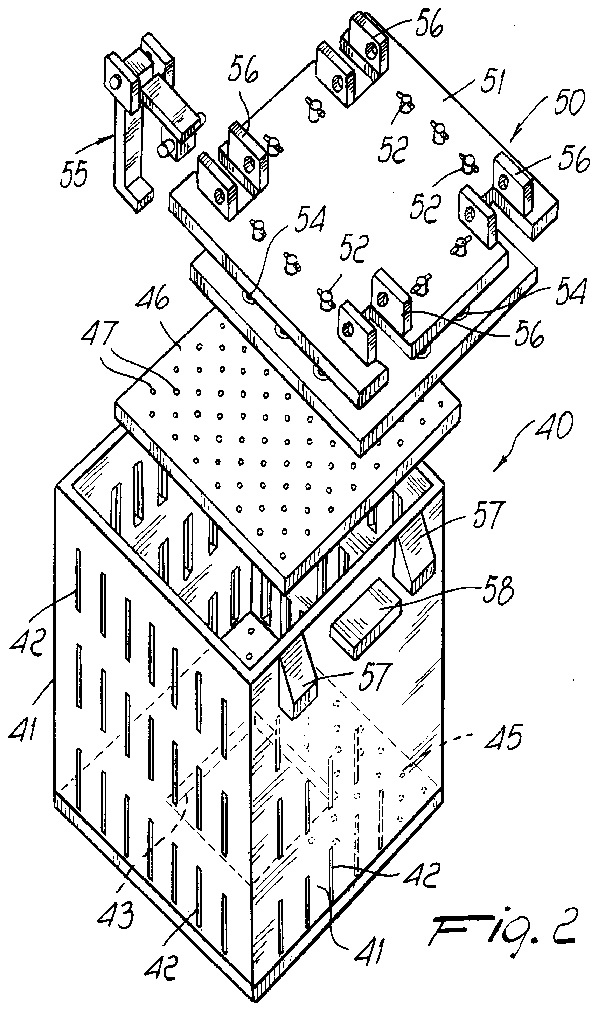

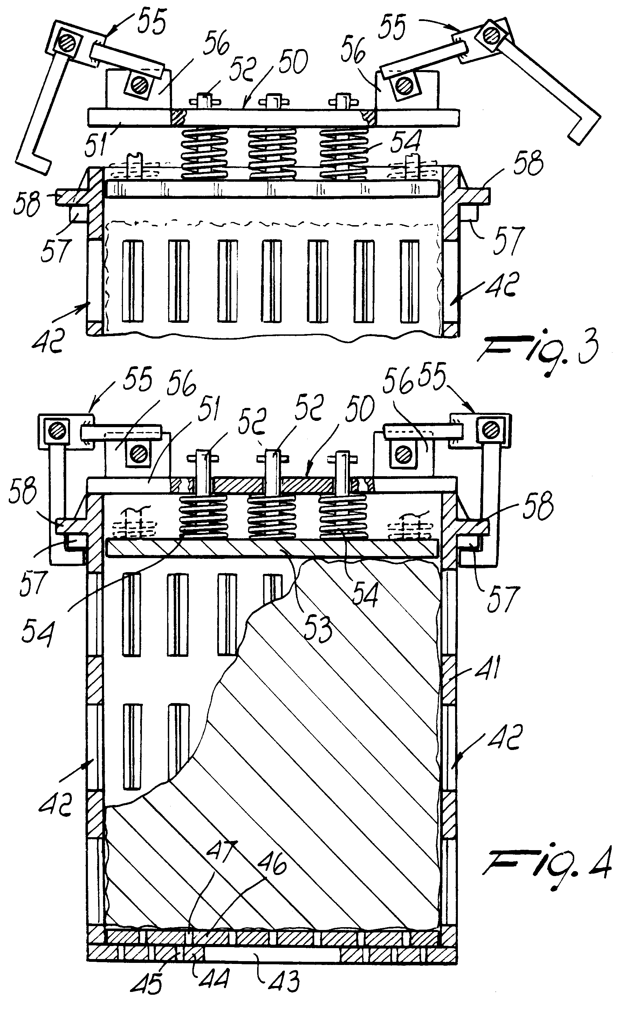

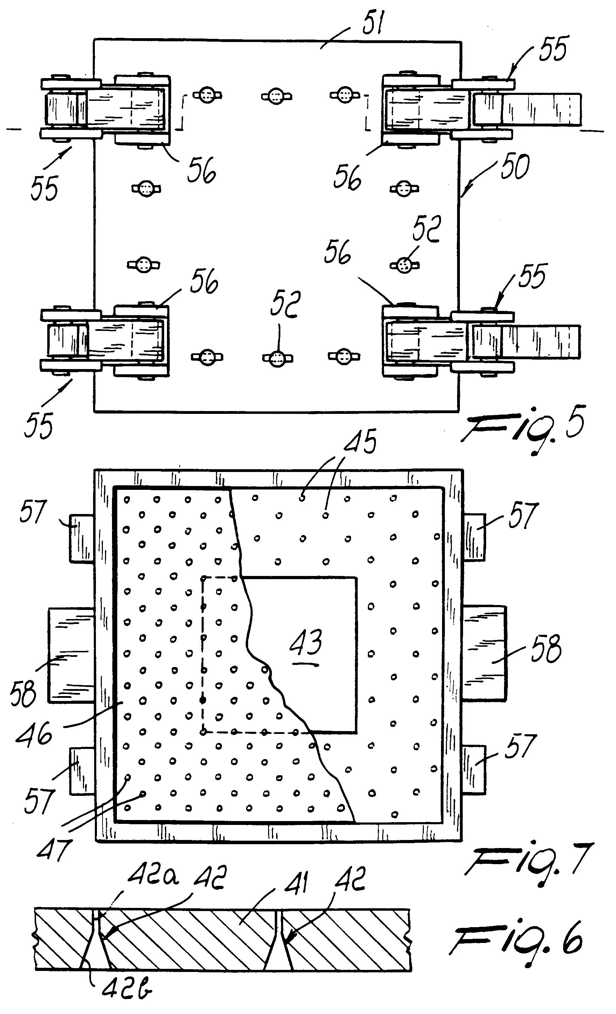

Molds, shown in figures 2 to 7, are used in the high-pressure compression unit and allow to remove the liquid phase to prevent the material from regaining the entire available volume at the end of the pressing action due to the incompressibility of liquids.

The molds, generally designated by the reference numeral 40, have a body 41 which has, on its lateral surface, multiple openings or vertical slots 42 which have, in a sectional view, a narrower inner part 42a that blends with a wider outer part 42b.

The bottom of the body 41 has a central opening 43 and a plate 44 which has drainage holes 45; a lower plate 46 with holes 47 is located on the bottom.

Compaction is performed by means of a lid 50 which has an upper closure plate 51 with which a compression plate 53 is slidingly associated by means of posts 52.

Presser springs, designated by the reference numeral 54, act between the closure plate 51 and the plate 53 around the posts 52.

The lid is coupled to the body 41 by virtue of hook-like elements 55 which are pivoted to lugs 56 formed on the upper part of the plate 51 and engage below teeth 57 formed on the lateral surface of the mold.

The body 41 furthermore has, between the teeth 57, abutment plates 58 that allow to block the body during the extraction of the compacted and compressed block of urban solid waste.

It should also be specified that the adoption of vertical openings allows excellent percolate drainage; the percolate escapes through the final drainage duct 31, consequently eliminating the spring effect produced by moisture.

The residual moisture content in the material is approximately 4-5%.

Experimental tests that have been conducted show that the pressure to be used must be between 200 and 500 kg/sq cm; in particular it has been observed that the value of 200 kg/sq cm can sometimes be insufficient to achieve the desired level of material compaction and density, whereas the application of pressures above 500 kg/sq cm has not yielded significant advantages as to the quality of the compacted product that is obtained.

Accordingly, the optimum pressure is between 300 and 350 kg/sq cm.

By using the above described mold, the material is kept under pressure with mechanical means constituted by the lid provided with the presser plate.

This provision has the double purpose of following the contraction of the volume of the material during the subsequent processing stage and of keeping the material in oxygen-free conditions to avoid combustion.

The mold is placed in the compaction area and moved away from it advantageously by means of a movable counterpressure point.

The loaded mold is removed by means of systems of the rail or rack type.

The waste compressed at high pressure is then introduced into a thermal pasteurization unit 60 to stabilize the organic materials and destroy the microorganisms that cause fermentation.

The material compacted in the mold, despite being homogenized, has an extremely unfavorable heat transmission coefficient.

During the pasteurization stage it is necessary to cause the evaporation of the residual moisture and to pasteurize the organic substances to make them stable in time and thus immune from putrefaction phenomena.

As is known, an organic material that is subjected to a thermal treatment becomes stable since the applied heat destroys the microorganisms that produce fermentation, including thermophilic strains.

Various processes can be applied to the heating of the material, ranging from continuous tunnel ovens to vacuum ovens and from the use of high temperatures to the use of low temperatures.

The optimum solution entails the use of a discontinuous-loading atmospheric oven which is heated by a direct flame to exploit the irradiation effect. As regards the temperatures, it is preferable to privilege the pasteurization time by operating for relatively long times at average temperatures.

Temperatures of the order of approximately 200° are accordingly applied for periods of 8-10 hours.

The high pressure on the material being heated is ensured by the pack of springs, which follows the contraction of the material.

The amount of moisture that enters the pasteurization process is between 4 and 6%, and the residual moisture of the pasteurized material is less than 1%.

No combustion occurs during the pasteurization process, which occurs by introducing combustion air which is the same air that is aspirated to keep the homogenization unit 1 and the storage unit 4 at a negative pressure.

Once the pasteurization stage has ended, the mold is introduced into a cooling unit 70, where cooling occurs by aspirating air by means of an aspiration duct 71 and by introducing hot air, produced by the cooling stage, in the storage and drying unit 4 by means of the drying duct 7; it is furthermore possible to introduce hot air in the pasteurization chamber as well.

Once cooling has been performed, the material is removed from the mold by means of a pusher that acts on the moving bottom, and then a lateral pusher conveys the block to a removal belt. Eventually , the block of material may be wrapped in a heat-shrinkable film.

The block of compacted and pasteurized material is compact, with a density of approximately 1.4-1.5 tons/cu m, and has a brownish color with a faint burned odor.

From what has been described above, it is thus evident that the invention achieves the intended aim and objects, and in particular the fact is stressed that an apparatus and a process are provided which allow to fully inactivate urban solid waste, producing a block which is compact and has good mechanical strength and can therefore be simply deposited in a landfill without developing bad odors and without all the typical drawbacks of a landfill, since all the organic material that is present has been pasteurized.

The above described apparatus furthermore has a very low environmental impact since it does not disseminate light materials, eliminating the proliferation of birds, insects, and rodents; furthermore, by keeping the treatment areas under negative pressure and by reusing the extracted air for combustion, the problem of odors is radically eliminated, also in view of the fact that the material is processed in a few hours and without producing biogas.

It should also be specified that any air that is not used during combustion can be deodorized in ozone towers with a preliminary basic scrubbing.

The invention thus conceived is susceptible of numerous modifications and variations, all of which are within the scope of the inventive concept.

All the details may furthermore be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Process for treating urban solid waste consisting of initially crushing (1) the waste that arrives from the collection vehicles, with a first drainage (3) of the percolate; in pre-drying (4) the crushed waste, with a second drainage (6) of the percolate; compacting (10) the crushed waste, with a third drainage (11) of the percolate; in compressing (20, 30) the compacted waste to reach a waste density of 1.4-1.5 tons/m³, with final drainage (21, 31) of the percolate; and removing the compacted waste from the mold and sending it to the landfill, **characterized in that** the process further consists of aspirating air (2, 5) from a closed space in which the waste crushing (1) and respectively pre-drying (4) occurs; subjecting, before removal from the mold, the compressed waste to thermal pasteurization (60) without combustion, to stabilize the organic materials and destroy the microorganisms that produce fermentation, with reusage of the aspirated air (2, 5) from said closed space; and in subjecting the pasteurized block to cooling (70).

2. Process according to claim 1, characterized in that said initial crushing of the waste occurs in an environment that is kept at a negative pressure by aspirating air.

3. Process according to the preceding claims, characterized in that said storage and pre-drying is performed at a negative pressure by aspirating air.

4. Process according to one or more of the preceding claims, characterized in that said pre-drying is performed by introducing hot air from the cooling unit (70).

5. Process according to one or more of the preceding claims, characterized in that it comprises, after the pre-drying of the crushed waste, a homogenization of the material with an intermediate drainage of percolate.

6. Process according to one or more of the preceding claims, characterized in that said pre-compaction is performed at a pressure of 50 to 100 kg/sq. cm.

7. Process according to one or more of the preceding claims, characterized in that said pre-compaction is performed for 30 to 120 seconds to raise the compacted material to a density of 1-1.2 tons/cu m.

8. Process according to one or more of the preceding claims, characterized in that said compression of the pre-compacted waste is performed at a pressure of 200 to 500 kg/sq. cm, preferably 300 to 350 kg/sq. cm.

9. Process according to one or more of the preceding claims, characterized in that said thermal pasteurization is performed at a temperature of approximately 200°C for 8 to 10 hours.

10. Process according to one or more of the preceding claims, characterized in that the combustion air for thermal pasteurization is drawn from a unit for the initial crushing of the waste and from a pre-drying unit, said crushing and pre-drying units constituting said closed space.

11. Process, according to one or more of the preceding claims, characterized in that the block of material, after the pasteurization, is wrapped in a heat-shrinkable film.

12. Apparatus for treating urban solid waste, as set forth in any of the preceding process claims, comprising: a unit (1) for the initial crushing of the waste that arrives from the collection vehicles; a unit (4) for pre-drying the crushed waste; a unit (20) for pre-compacting, at low pressure, the crushed and dried waste; a high-pressure compaction unit (30), **characterized in that** it further comprises a thermal pasteurization unit (60) for thermal pasteurization of the compacted waste without combustion to stabilize the organic materials and destroy the microorganisms that produce fermentation; an air aspirating system (2, 5) for aspirating air from said crushing unit (1) and said pre-drying unit and introducing the aspirated air in said pasteurization unit (60); and a cooling unit (70) wherein the pasteurized block is subjected to cooling.

13. Apparatus according to claim 12, characterized in that the pre-compaction unit (20) has gravimetric and volumetric control systems for supervising the working cycle.

14. Apparatus according to claim 12, characterized in that it comprises a homogenization unit (10) between said drying unit (4) and said compaction unit (20).

15. Apparatus according to one or more of the claims 12 to 14 **characterized in that** it comprises, in said compaction unit (30), a mold (40) which has a body (41) having a bottom with a central opening (43) and a plate (44) with drainage holes (45), a lower perforated plate (46) being placed on said bottom, said body (41) being closed, in an upward region, by a compression plate (53) which has holes and on which a lid (50) acts, presser springs (54) being furthermore provided which act between said lid (50) and said compression plate (53), said body (41) having, on its lateral surface, multiple openings or vertical slots (42) for draining the material, and said compression plate (53) being connected to said lid (50) by means of sliding posts (52).

16. Apparatus according to one or more of the claims 12 to 15, characterized in that it comprises means for coupling the lid to said body which are constituted by hook-like elements (55) which are pivoted to lugs (56) formed by the upper closing plate of the lid (50), said hooks (55) engaging teeth (57) formed on the lateral surface of said mold (40).

17. Apparatus according to one or more of the claims 12 to 16, characterized in that the body (41) of said mold (40) has, between said teeth (57), abutment plates (58) to retain said mold (40) during the extraction of the compacted and compressed block of urban solid waste.

## Patentansprüche

1. Verfahren zum Behandeln städtischer Feststoffabfälle, bei dem zunächst der von den Sammelfahrzeugen kommende Abfall zerkleinert (1) wird, wobei eine erste Drainage (3) des Perkolats erfolgt; der zerkleinerte Abfall vorgetrocknet (4) wird, wobei eine zweite Drainage (6) des Perkolats erfolgt; der zerkleinerte Abfall verdichtet (10) wird, wobei eine dritte Drainage (11) des Perkolats erfolgt; der verdichtete Abfall verpreßt (20, 30) wird, um eine Abfalldichte von 1,4 bis 1,5 t/m³ zu erreichen, wobei eine Enddrainage (21, 31) des Perkolats erfolgt; und der verdichtete Abfall aus der Form entfernt und der Deponie zugeführt wird, dadurch **gekennzeichnet**, daß in dem Verfahren ferner Luft (2, 5) aus einem geschlossenen Raum angesaugt wird, in dem die Abfallzerkleinerung (1) und die jeweilige Vortrocknung (4) durchgeführt wird; daß der verpreßte Abfall vor dem Entfernen aus der Form einer thermischen Pasteurisierung (60) ohne Verbrennung unterzogen wird, um die organischen Materialien zu stabilisieren und die eine Fermentation erzeugenden Mikroorganismen zu zerstören, wobei die angesaugte Luft (2, 5) aus dem geschlossenen Raum wiederverwendet wird; und daß der pasteurisierte Block einer Kühlung (70) unterzogen wird.

2. Verfahren nach Anspruch 1, dadurch **gekennzeichnet**, daß die anfängliche Zerkleinerung des Abfalls in einer Umgebung erfolgt, die durch Ansaugen von Luft auf einem negativen Druck gehalten wird.

3. Verfahren nach den vorhergehenden Ansprüchen, dadurch **gekennzeichnet**, daß das Speichern und Vortrocknen bei negativem Druck durch Ansaugen von Luft erfolgt.

4. Verfahren nach einem oder mehreren der vorhergehenden Ansprüche, dadurch **gekennzeichnet**, daß das Vortrocknen durch Einführen heißer Luft aus der Kühleinheit (70) erfolgt.

5. Verfahren nach einem oder mehreren der vorhergehenden Ansprüche, dadurch **gekennzeichnet**, daß nach dem Vortrocknen des zerkleinerten Abfalls eine Homogenisierung des Materials mit einer Zwischendrainage von Perkolat erfolgt.

6. Verfahren nach einem oder mehreren der vorhergehenden Ansprüche, dadurch **gekennzeichnet**, daß die Vorverdichtung bei einem Druck von 50 bis 100 kg/cm² erfolgt.

7. Verfahren nach einem oder mehreren der vorhergehenden Ansprüche, dadurch **gekennzeichnet**, daß die Vorverdichtung für eine Zeit von 30 bis 120 Sekunden erfolgt, um das verdichtete Material auf eine Dichte von 1 bis 1,2 t/m³ zu bringen.

8. Verfahren nach einem oder mehreren der vorhergehenden Ansprüche, dadurch **gekennzeichnet**, daß das Verpressen des vorverdichteten Abfalls bei einem Druck von 200 bis 500 kg/cm², vorzugsweise von 300 bis 350 kg/cm², erfolgt.

9. Verfahren nach einem oder mehreren der vorhergehenden Ansprüche, dadurch **gekennzeichnet**, daß die thermische Pasteurisierung bei einer Temperatur von etwa 200°C für eine Zeit von 8 bis 10 Stunden erfolgt.

10. Verfahren nach einem oder mehreren der vorhergehenden Ansprüche, dadurch **gekennzeichnet**, daß die Verbrennungsluft für die thermische Pasteurisierung einer Einheit zur anfänglichen Zerkleinerung des Abfalls und einer Vortrocknungseinheit entzogen wird, die den geschlossenen Raum bilden.

11. Verfahren nach einem oder mehreren der vorhergehenden Ansprüche, dadurch **gekennzeichnet**, daß der Materialblock nach dem Pasteurisieren in einen wärmeschrumpfbaren Film eingehüllt wird.

12. Einrichtung zum Behandeln städtischer Feststoffabfälle mit dem Verfahren nach einem der vorhergehenden Ansprüche, mit einer Einheit (1) zum anfänglichen Zerkleinern des von den Sammelfahrzeugen kommenden Abfalls; einer Einheit (4) zum Vortrocknen des zerkleinerten Abfalls; einer Einheit (20) zum Vorverdichten des zerkleinerten und getrockneten Abfalls bei Niederdruck; und einer Hochdruck-Verdichtungseinheit (30), dadurch **gekennzeichnet**, daß ferner eine thermische Pasteurisiereinheit (60) zum thermischen Pasteurisieren des verdichteten Abfalls ohne Verbrennung zum Stabilisieren der organischen Stoffe und zum Zerstören der eine Fermentation erzeugenden Mikroorganismen; ein Luftansaugsystem (2, 5) zum Ansaugen von Luft aus der Zerkleinerungseinheit (1) und der Vortrocknungseinheit und zum Einführen der angesaugten Luft in die Pasteurisiereinheit (60); und eine Kühleinheit (70) zum Kühlen des pasteurisierten Bocks vorgesehen sind.

13. Einrichtung nach Anspruch 12, dadurch **gekennzeichnet**, daß die Vorverdichtungseinheit (20) ein gravimetrisches und ein volumetrisches Steuersystern zum Überwachen des Arbeitszyklus enthält.

14. Einrichtung nach Anspruch 12, dadurch **gekennzeichnet**, daß sie eine Homogenisierungseinheit (10) zwischen der Trocknungseinheit (4) und der Verdichtungseinheit (20) enthält.

15. Einrichtung nach einem oder mehreren der Ansprüche 12 bis 14, dadurch **gekennzeichnet**, daß sie in der Verdichtungseinheit (30) eine Form (40) mit einem Körper (41) mit einem Boden mit zentraler Bodenöffnung (43), einer Platte (44) mit Drainagelöchern (45) sowie einer unteren perforierten Platte (46) auf dem Boden enthält, daß der Körper (41) in einem oberen Bereich durch eine Verpreßplatte (53) geschlossen ist, die Löcher hat und auf die ein Deckel (50) einwirkt, daß ferner Druckfedern (54) zwischen dem Deckel (50) und der Verpreßplatte (53) vorgesehen sind, daß der Körper (41) an seiner Seitenfläche mehrere Öffnungen oder vertikale Schlitze (42) zur Drainage des Materials hat, und daß die Verpreßplatte (53) mit dem Deckel (50) über Führungsbolzen (52) verbunden ist.

16. Einrichtung nach einem oder mehreren der Ansprüche 12 bis 15, dadurch **gekennzeichnet**, daß sie Mittel zum Koppeln des Deckels mit dem Körper in Form hakenartiger Elemente (55) hat, die an Ösen (56) schwenkbar sind, welche an der oberen Schließplatte des Deckels (50) gebildet sind, und daß die Haken (55) mit Zähnen (57) in Eingriff sind, die an der Seitenfläche der Form (40) ausgebildet sind.

17. Einrichtung nach einem oder mehreren der Ansprüche 12 bis 16, dadurch **gekennzeichnet**, daß der Körper (41) der Form (40) zwischen den Zähnen (57) Anschlagplatten (58) zum Halten der Form (40) während der Entfernung des verdichteten und verpreßten Blocks aus städtischem Festkörperabfall hat.

## Revendications

1. Procédé pour traiter des déchets solides urbains consistant initialement à broyer (1) des déchets qui arrivent des véhicules de collecte, avec un premier drainage (3) du percolat ; à pré-sécher (4) les déchets broyés, avec un deuxième drainage (6) du percolat ; à compacter (10) les déchets broyés, avec un troisième drainage (11) du percolat ; à compresser ( 20,30) les déchets compactés pour atteindre une masse volumique des déchets de 1,4-1,5 tonne/m³, avec un drainage final (21,31) du percolat ; et à retirer les déchets compactés du moule et les envoyer vers la décharge,
caractérisé en ce que le procédé consiste de plus à aspirer de l'air (2,5) à partir d'un espace fermé dans lequel le broyage (1) et le pré-séchage (4) des déchets, respectivement, surviennent ; à soumettre, avant le retrait du moule, les déchets compressés à une pasteurisation thermique (60) sans combustion, pour stabiliser les matières organiques et détruire les micro-organismes qui produisent la fermentation, avec réutilisation de l'air aspiré (2,5) à partir dudit espace fermé ; et à soumettre le bloc pasteurisé au refroidissement (70).

2. Procédé selon la revendication 1,
caractérisé en ce que le broyage initial des déchets intervient dans un environnement qui est maintenu à une pression négative par aspiration d'air.

3. Procédé selon les revendications précédentes,
caractérisé en ce que ledit stockage et ledit pré-séchage sont réalisés à une pression négative par aspiration d'air.

4. Procédé selon l'une ou plusieurs des revendications précédentes,
caractérisé en ce que ledit pré-séchage est réalisé en introduisant de l'air chaud à partir de l'unité de refroidissement (70).

5. Procédé selon l'une ou plusieurs des revendications précédentes,
caractérisé en ce qu'il comprend, après le pré-séchage des déchets broyés, une homogénéisation de la matière avec un drainage intermédiaire du percolat.

6. Procédé selon l'une ou plusieurs des revendications précédentes,
caractérisé en ce que ledit pré-compactage est réalisé sous une pression de 50 à 100 kg/cm².

7. Procédé selon l'une ou plusieurs des revendications précédentes,
caractérisé en ce que ledit pré-compactage est réalisé pendant 30 à 120 secondes pour amener la matière compactée à une masse volumique de 1-1,2 tonne/m³.

8. Procédé salon l'une ou plusieurs des revendications précédentes,
caractérisé en ce que ladite compression des déchets pré-compactés est réalisée sous une pression de 200 à 500 kg/cm², de préférence 300 à 350 kg/cm².

9. Procédé selon l'une ou plusieurs des revendications précédentes,
caractérisé en ce que ladite pasteurisation thermique est réalisée à une température d'approximativement 200°C pendant 8 à 10 heures.

10. Procédé selon l'une ou plusieurs des revendications précédentes,
caractérisé en ce que l'air de combustion pour la pasteurisation thermique est aspiré à partir d'une unité pour le broyage initial des déchets et à partir d'une unité de pré-séchage, lesdites unités de broyage et de préséchage constituant ledit espace fermé.

11. Procédé selon l'une ou plusieurs des revendications précédentes,
caractérisé en ce que le bloc de matière, après la pasteurisation, est enroulé dans un film rétrécissable à chaud.

12. Appareil pour traiter des déchets solides urbains, selon l'une quelconque des revendications de procédé précédentes, comprenant :
- une unité (1) pour le broyage initial des déchets qui arrivent à partir des véhicules de collecte ;
- une unité (4) pour le pré-séchage des déchets broyés ;
- une unité (20) pour le pré-compactage, à basse pression, des déchets broyés et séchés ;
- une unité de compactage à haute pression (30),
caractérisé en ce qu'il comprend de plus une unité de pasteurisation thermique (60) pour la pasteurisation thermique des déchets compactés sans combustion pour stabiliser les matières organiques et détruire les micro-organismes qui produisent la fermentation ; un système d'aspiration d'air (2,5) pour aspirer de l'air à partir de ladite unité de broyage (1) et de ladite unité de pré-séchage et pour introduire l'air aspiré dans ladite unité de pasteurisation (60) ; et une unité de refroidissement (70) dans laquelle le bloc pasteurisé est soumis au refroidissement.

13. Appareil selon la revendication 12,
caractérisé en ce que l'unité de pré-compactage (20) présente des systèmes de commande gravimétriques et volumétriques pour superviser le cycle de travail.

14. Appareil selon la revendication 12,
caractérisé en ce qu'il comprend une unité d'homogénéisation (10) entre ladite unité de séchage (4) et ladite unité de compactage (20).

15. Appareil selon l'une ou plusieurs des revendications 12 à 14,
caractérisé en ce qu'il comprend, dans ladite unité de compactage (30), un moule (40) qui présente un corps (41) ayant un fond avec une ouverture centrale (43) et une plaque (44) ayant des trous de drainage (45), une plaque perforée inférieure (46) étant placée sur ledit fond, ledit corps (41) étant fermé, dans une région supérieure, par une plaque de compression (53) qui présente des trous et sur laquelle un couvercle (50) agit, des ressorts de pression (54) étant de plus prévus qui agissent entre ledit couvercle (50) et ladite plaque de compression (53), ledit corps (41) présentant, sur sa surface latérale, des ouvertures multiples ou des fentes verticales (42) pour drainer la matière, et ladite plaque de compression (53) étant reliée audit couvercle (50) par l'intermédiaire de montants coulissants (52).

16. Appareil selon l'une ou plusieurs des revendications 12 à 15,
caractérisé en ce qu'il comprend des moyens pour relier le couvercle audit corps qui sont constitués par des éléments en forme de crochets (55) qui sont articulés à des pattes (56) formées par la plaque de fermeture supérieure du couvercle (50), lesdits crochets (55) engageant des dents (57) formées sur la surface latérale dudit moule (40).

17. Appareil selon l'une ou plusieurs des revendications 12 à 16,
caractérisé en ce que le corps (41) dudit moule (40) présente, entre lesdites dents (57), des plaques d'aboutement (58) pour retenir ledit moule (40) pendant l'extraction du bloc compacté et comprimé de déchets solides urbains.
